# FASCICULE DE BREVET EUROPEEN

(11) **EP 2 273 159 B1**
(45) Date de publication et mention de la délivrance du brevet: **09.04.2014**
(21) Numéro de dépôt: 10305543.0
(22) Date de dépôt: 21.05.2010
(51) Int. Cl.: F16H 61/24

(54) **Dispositif de filtrage à inertie pour commande de passage de vitesses manuelle**
Trägheitsbasierte Filtervorrichtung zur manuellen Getriebeschaltung
Inertia based filtering device for manual gear shifting control

(30) Priorité: 08.06.2009 FR 0953789
(43) Date de publication de la demande: 12.01.2011
(73) Titulaire: Renault S.A.S., 92100 Boulogne-Billancourt (FR)
(72) Inventeur: Bal, Annette, 92500, Rueil Malmaison (FR); Raoul, Michel, 78990, Elancourt (FR)

(56) Documents cités:
- DE-A1- 19 523 141
- FR-A1- 2 803 252
- FR-A1- 2 902 170

## Description

La présente invention porte sur un dispositif à inertie utilisé dans un mécanisme de changement de rapport de boite de vitesses manuelle pour véhicule automobile.

Plus précisément, elle a pour objet un dispositif de filtrage à inertie pour commande de passage de boîte de vitesses manuelle, comportant une masse d'inertie entraînée en rotation par un levier d'entraînement à partir d'un levier de commande externe à la boîte.

Une des critiques principales exprimée à l'égard des boîtes de vitesses manuelles vient du fait que la commande semble « accrocher » lors des changements de rapport. Cette sensation est liée au fait que le conducteur intervient sur les mécanismes internes de la boîte de vitesses à partir de son levier, et ressent en retour, au travers de celui-ci, les efforts et les chocs des pièces internes de la boîte lors des changements de rapport.

Lorsqu'on utilise des dispositifs d'accouplement, ou synchroniseurs conventionnels à baladeurs et à crabots, on peut établir un lien très fort entre cette sensation désagréable, et le choc des dents du baladeur contre celles du pignon, lors du crabotage.

Ces chocs sont dus à la rotation relative du pignon et du baladeur pendant la phase intermédiaire, entre la synchronisation proprement dite, et le crabotage. Durant cette phase intermédiaire se produit en effet un « désindexage », appelé aussi « dévirage », du pignon par rapport au baladeur, pendant laquelle le baladeur et le pignon perdent temporairement tout lien en rotation.

On sait également, que les commandes de vitesses à câbles accentuent ce phénomène, par rapport aux anciennes commandes à barre rigide.

Pour remédier à ce problème, il est possible d'augmenter l'inertie de la commande pour lisser les pics d'efforts, par exemple en intégrant une masse additionnelle d'inertie, à débattement latéral, à la chaîne cinématique de commande reliant le levier du conducteur, et les synchroniseurs. Toutefois, l'utilisation de masses additionnelles à débattement déporté, revient à alourdir le levier de passage (et aussi le véhicule). Par ailleurs, ces masses posent vite un problème d'encombrement lorsqu'elles doivent débattre à l'intérieur du compartiment moteur, et elles augmentent la sensibilité aux vibrations (grésillement de la commande). Enfin, dans des circonstances de conduite particulières, et sous de fortes accélérations, ces masses additionnelles peuvent provoquer des lâchers de vitesses.

Par la publication FR 2 803 252, on connaît un dispositif de commande de boîte manuelle à masse d'inertie d'un type différent, selon lequel la masse d'inertie tourne autour de son propre axe, et est entraînée en rotation par un levier de passage autour d'un axe fixe par rapport au carter de la boîte, par l'intermédiaire de secteurs dentés dans un rapport de réduction de vitesses, de la masse d'inertie vers le levier de passage.

Toutefois, ce dispositif d'entraînement n'est pas protégé de l'environnement sous capot moteur, et son rapport de réduction est assuré par un seul étage de denture. Enfin, le découplage entre la masse d'inertie fixe longitudinalement à son axe, et l'axe de passage qui doit au contraire se déplacer pour les besoins de sélection de rapport, est assuré par le coulissement dans la denture.

La publication FR 2 902 170 décrit un dispositif ayant toutes les caractéristiques du préambule de la revendication 1.

La présente invention vise à protéger de l'environnement du compartiment moteur un dispositif de filtrage à inertie, tout en augmentant la possibilité de rapport de démultiplication et en se préservant du contact de denture glissant.

Dans ce but, elle propose que la masse d'inertie soit logée dans un boîtier de protection fermé intégré au palier de commande interne de la boîte.

De préférence, le boîtier de protection est une excroissance de ce palier.

Selon une autre caractéristique de l'invention, le système de démultiplication est composé d'un train épicycloïdal situé dans le même boîtier que la masse d'inertie et contenu dans l'encombrement radial de cette masse d'inertie.

Dans cette disposition, l'encombrement est minimal.

Ce dispositif, composé d'un pignon planétaire solidaire de cette masse d'inertie, d'un porte-satellites avec un à trois satellites, solidaire d'un levier de commande et d'une couronne fixe intégrée au boîtier, qui permet une haute performance en démultiplication.

D'autres caractéristiques et avantages de la présente invention ressortiront clairement de la description suivante d'un mode de réalisation non limitatif de celle-ci, en liaison avec les dessins annexés, sur lesquels :
- la figure 1 montre l'implantation du dispositif proposé sur une boîte de vitesses,
- la figure 2 est une coupe de ce dispositif,
- les figures 3a et 3b sont des coupes du même dispositif, avec levier de passage respectivement en position haute et en position basse, et
- les figures 4a et 4b sont des vues de dessus du dispositif, avec le levier de passage respectivement en position « neutre » et « vitesse engagée ».

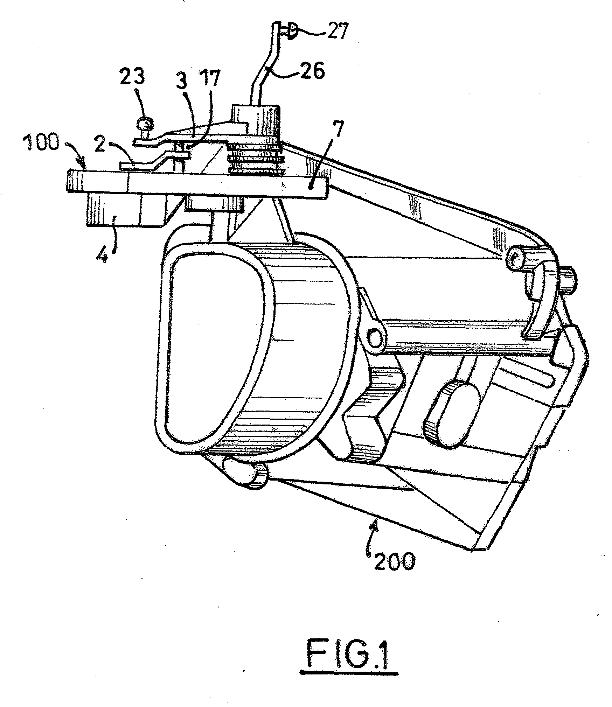

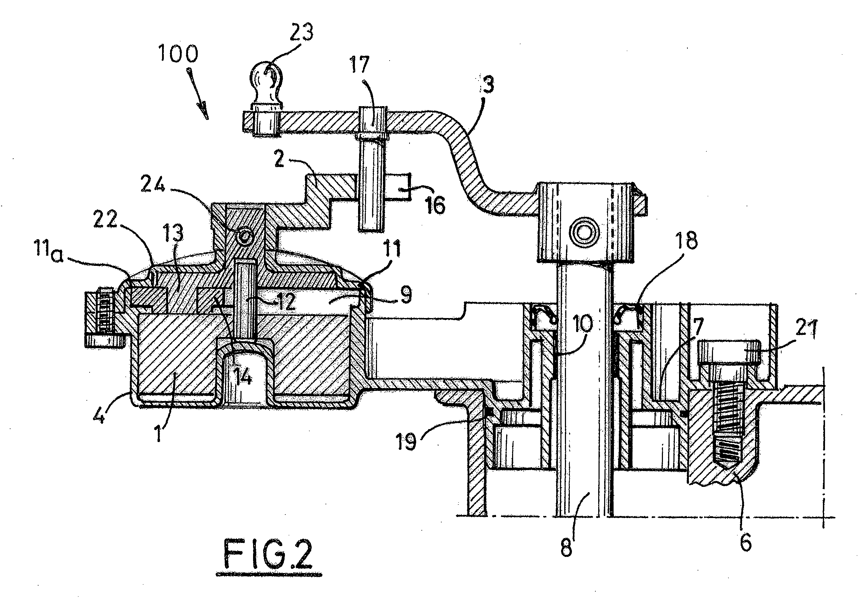

La figure 1 présente, de façon non limitative, une implantation du dispositif de filtrage à inertie 100, proposé par l'invention, sur une boîte de vitesses 200. Le dispositif 100 présente un boîtier 4, renfermant une masse d'inertie 1 (voir figure 2). Le boîtier 4 est une excroissance du palier de guidage 7 d'un de commande interne 8 de la boîte. La boîte 200 porte un levier de passage externe 3 et un levier de sélection 26 portant, chacun une rotule 23, 27 destinée à recevoir l'extrémité d'un câble de passage et d'un câble de sélection de vitesses (non représentés). Enfin, le dispositif de filtrage 100 présente un levier d'entraînement 2, qui est traversé par un pion vertical 17, s'étendant vers le bas, à partir du levier 3.

Comme indiqué ci-dessus, le boîtier 4 du dispositif 100 constitue une excroissance du palier 7, d'un axe de commande interne 8 de la boîte, montré sur la figure 2. L'axe 8 transmet au mécanisme de changement de vitesses interne de la boîte (non représenté), les mouvements du levier de passage externe 3. L'étanchéité du carter de boîte 6 autour du palier de guidage 7, est assurée par un joint 19. Le schéma montre également une bague de guidage 10 de l'axe 8 dans son palier 7, un joint d'étanchéité 18 du palier de guidage 7 autour de l'axe 8, et une vis de fixation 21 du palier de guidage 7 sur le carter 6. Le boîtier 4 présente un couvercle 22. La masse d'inertie 1 est ainsi logée dans un boîtier de protection fermé 4, rapporté sur le palier de guidage 7, à proximité du levier de passage externe 3.

L'axe de commande 8 se déplace dans son palier 7, en rotation et en translation. Ses déplacements en rotation assurent l'engagement ou le dégagement des rapports de la boîte. Ces mouvements s'effectuent sous la commande du levier de passage, lui-même actionné par un câble (non représenté) s'accrochant sur la rotule 23. L'axe 8 et le levier de passage 3 sont solidaires. Ils peuvent donc également se déplacer ensemble en translation, pour sélectionner une ligne de vitesses sous le contrôle du levier de sélection 26 de la figure 1.

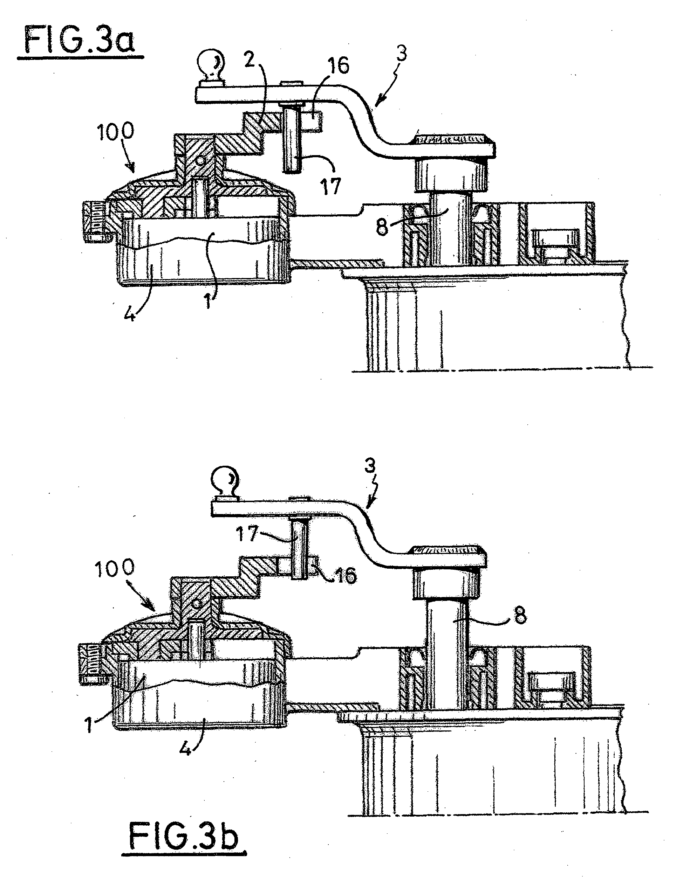

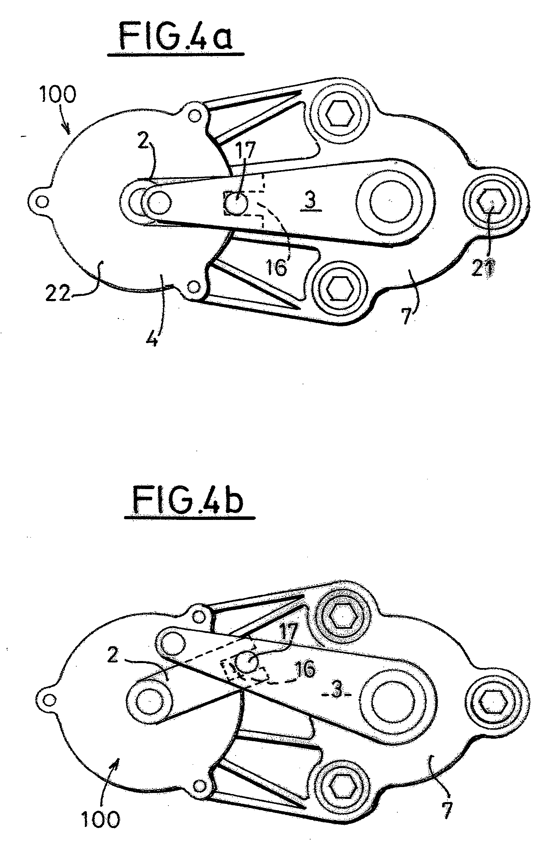

Le levier de passage porte un pion 17, orienté vers le bas, qui coopère avec le levier d'entraînement 2. Le dispositif de filtrage à inertie pour commande de passage de boîte de vitesses manuelle proposé, comporte donc une masse d'inertie 1 entraînée en rotation par un levier d'entraînement 2 à partir d'un levier de commande 3 externe à la boîte. Cet entraînement est assuré par le pion 17, qui se déplace dans une ouverture longitudinale 16 du levier d'entraînement 2, visible notamment sur les figures 4A, 4B. L'ouverture 16 coopère donc avec le pion 17, porté par le levier de passage 3. Le pion se déplace le long de l'ouverture 16, lors des déplacements en rotation de l'axe de commande 8 (cf. figures 4A et 4B). Il se déplace selon une direction transversale à celui-ci (verticale) (cf. figures 3A et 3B), lors des déplacements en translation de l'axe de commande 8. Entre la figures 3A (levier de passage 3 en position haute) et la figure 3B (levier 3 en position basse), l'axe de commande interne 8, solidaire du levier 3, s'est aussi déplacé en translation vers le haut, pour sélectionner, ou désélectionner, une ligne de vitesses à l'intérieur de la boîte. Le pion 17 s'est également déplacé verticalement dans l'ouverture 16 du levier d'entraînement 2.

La masse d'inertie 1 n'est cependant pas entraînée directement par le levier d'entraînement 2, mais par l'intermédiaire d'un dispositif multiplicateur de vitesses 9, du type planétaire. Ce dispositif est constitué d'une couronne fixe 11, d'un axe planétaire 12 solidaire de la masse d'inertie 1, d'un porte-satellites 13 lié au levier d'entraînement 2 par l'élément de liaison 24, et d'au moins un satellite 14 entraîné par le porte satellite 13. Enfin, les dents 11a de la couronne fixe 11, font partie du boîtier de protection 4.

Sur les figures 4A et 4B, on reconnaît, outre les deux leviers 2, 3, le palier de guidage 7 de l'axe 8 et son excroissance 4 constituant le boîtier, le couvercle du boîtier 22, ainsi que la vis de fixation 21 du palier 7 sur le carter 6. Les deux leviers 2 et 3, sont alignés en position de point mort (figure 4A). Lors de l'engagement d'un rapport (figure 4B), ils s'écartent de cette position, et le pion 17 se déplace vers l'extérieur le long de l'ouverture 16.

## Revendications

1. Dispositif de filtrage à inertie pour commande de passage de boîte de vitesses manuelle, comportant une masse d'inertie (1) entraînée en rotation par un levier d'entraînement (2) à partir d'un levier de passage (3) externe à la boîte, la masse d'inertie (1) étant logée dans un boîtier de protection fermé (4), **caractérisé en ce que** ledit boîtier de protection est intégré au palier (7) d'un axe de commande interne (8) solidaire du levier de passage (3).

2. Dispositif de filtrage selon la revendication 1, **caractérisé en ce que** le boîtier de protection (4) constitue une excroissance du palier (7) de l'axe de commande interne(8).

3. Dispositif de filtrage selon la revendication 2, **caractérisé en ce que** la masse d'inertie (1) est entraînée par l'intermédiaire d'un dispositif multiplicateur de vitesses (9) constitué par un train épicycloïdal.

4. Dispositif de filtrage selon la revendication 3, **caractérisé en ce que** le dispositif multiplicateur de vitesses (9) comprend une couronne fixe (11) faisant partie du boîtier (4), un planétaire (12) solidaire de la masse d'inertie (1), un porte-satellites (13) lié au levier d'entraînement (2), et au moins un satellite (14) entraîné par le porte-satellites (13).

## Patentansprüche

1. Trägheitsbasierte Filtervorrichtung zur manuellen Getriebeschaltung, umfassend eine Schwungmasse (1), die von einem Antriebshebel (2) drehmäßig angetrieben wird, ausgehend von einem Schalthebel (3) außerhalb des Getriebes, wobei die Schwungmasse (1) in einem geschlossenen Schutzgehäuse (4) aufgenommen ist, **dadurch gekennzeichnet, dass** das Schutzgehäuse in das Lager (7) einer internen Steuerachse (8) integriert ist, die mit dem Schalthebel (3) fest verbunden ist.

2. Filtervorrichtung nach Anspruch 1, **dadurch gekennzeichnet, dass** das Schutzgehäuse (4) eine Ausstülpung des Lagers (7) der internen Steuerachse (8) bildet.

3. Filtervorrichtung nach Anspruch 2, **dadurch gekennzeichnet, dass** die Schwungmasse (1) über ein Übersetzungsgetriebe (9), das aus einem Planetengetriebezug besteht, angetrieben wird.

4. Filtervorrichtung nach Anspruch 3, **dadurch gekennzeichnet, dass** das Übersetzungsgetriebe (9) einen Leitkranz (11), der Teil des Gehäuses (4) ist, ein Zentralrad (12), das mit der Schwungmasse (1) fest verbunden ist, einen Planetenradträger (13), der mit dem Antriebshebel (2) verbunden ist, und mindestens ein Planetenrad (14), das von dem Planetenradträger (13) angetrieben wird, umfasst.

## Claims

1. Inertia based filtering device for manual gearbox shifting control, comprising an inertial mass (1) driven in rotation by a drive lever (2) from a shifting lever (3) outside the gearbox, the inertial mass (1) being housed in a closed protective casing (4), **characterized in that** said protective casing is integrated into the bearing (7) of an internal control spindle (8) which is secured to the shifting lever (3).

2. Filtering device according to Claim 1, **characterized in that** the protective casing (4) projects from the bearing (7) of the internal control spindle (8).

3. Filtering device according to Claim 2, **characterized in that** the inertial mass (1) is driven via the intermediary of a speed step-up device (9) consisting of a planetary gearset.

4. Filtering device according to Claim 3, **characterized in that** the speed step-up device (9) comprises a fixed annulus gear (11) which is part of the casing (4), a sun gear (12) which is secured to the inertial mass (1), a planet carrier (13) which is connected to the drive lever (2) and at least one planet wheel (14) which is driven by the planet carrier (13).
